# FASCICULE DE BREVET EUROPEEN

(11) **EP 3 402 686 B1**
(45) Date de publication et mention de la délivrance du brevet: **27.07.2022**
(21) Numéro de dépôt: 17702676.2
(22) Date de dépôt: 04.01.2017
(51) Int. Cl.: B60H 1/00, B60H 3/00, F24F 3/16

(54) **PROCÉDÉ DE DÉCONTAMINATION D'HABITACLE DE VÉHICULE**
VERFAHREN ZUR DEKONTAMINATION EINES FAHRZEUGINNENRAUMS
METHOD OF DECONTAMINATING A VEHICLE INTERIOR

(30) Priorité: 11.01.2016 FR 1650179
(43) Date de publication de la demande: 21.11.2018
(73) Titulaire: PSA Automobiles SA, 78300 Poissy (FR)
(72) Inventeur: RAVINDRABALAN, Nisanthi, 77500 Chelles (FR); CREHAN, Gabriel, 92420 Vaucresson (FR); DUMUR, Denis, 78990 Elancourt (FR)
(86) Numéro de dépôt international: PCT/FR2017/050015
(87) Numéro de publication internationale: WO 2017/121945

(56) Documents cités:
- EP-A1- 2 050 602
- WO-A1-2014/089785
- FR-A1- 2 944 998
- US-A1- 2005 031 503

## Description

La présente invention concerne de manière générale un procédé de décontamination d'habitacle d'un véhicule automobile, et plus précisément un procédé de décontamination d'habitacle d'un véhicule automobile exécuté automatiquement.

Afin d'avoir un air de bonne qualité dans un habitacle de véhicule automobile, il est important de détecter la présence d'une concentration importante/anormale de microorganismes émetteurs de composés organiques volatils (COV) dans l'habitacle afin d'améliorer la qualité de l'air de ce véhicule qui est soumis à une pollution naturelle de type anthropique ou biotique, de type exceptionnel/courant, annuel/saisonnier et/ou régional/local. De manière générale, ce type de pollution concerne les microorganismes.

En général, les dispositif habituellement présents dans un véhicule pour assurer une bonne qualité de l'air et traiter les composés organiques volatils, sont composés d'au moins un système d'air conditionné avec ventilation et chauffage (HVAC) avec filtre de traitement intégré (recyclage de l'air intérieur via un pulseur), et d'un dispositif de traitement de l'air de l'habitacle, par exemple, une centrale de dépollution comprenant des média adsorbants et/ou catalytiques, des filtres, des ioniseurs ou du même genre.

Le problème est qu'un mauvais entretien du système de climatisation/réfrigération et des surfaces de l'habitacle engendre une pollution microbienne qui peut former un biofilm qui dégage des COV qui sentent mauvais et produisent un sentiment d'inconfort. De plus, un conduit d'évacuation d'eau de condensat peut se boucher et générer des rétentions d'eau avec développement de microorganismes. Ces disfonctionnements se traduisent généralement par des mauvaises odeurs perceptibles par les passagers.

L'émission des COV générés par les microbes peut être traité aujourd'hui par divers moyens existants, mais il faut les détecter, et les traiter en éradiquant la présence de microbes. Un problème de ces traitements est cependant qu'ils sont lourds à mettre en œuvre car le véhicule doit être vide de passagers à cause de l'utilisation de substances toxiques.

Comme mentionné ci-dessous, il est connu dans l'art antérieur des procédés de décontamination d'habitacle de véhicule automobile. Plus particulièrement, Le document EP 2 743 106 décrit un système d'épuration de l'air de l'habitacle d'un véhicule automobile par un capteur de composés organiques volatils (COV) et un traitement par filtre à charbon actif. Le document EP2050602 décrit un système générateur d'ions embarqué, destiné à être monté sur un véhicule, le système comprenant un générateur d'ions et un module de commande conçu pour en commander le fonctionnement. Le générateur d'ions est alimenté en courant électrique par une batterie embarquée. Le générateur d'ions est capable de générer des ions permettant d'éliminer les odeurs et d'assurer une stérilisation avant et après l'utilisation du véhicule, notamment lorsque le moteur du véhicule a été coupé par le module de commande. Ces procédés ne permettent cependant pas d'agir contre la source de pollution organique, et ne permet pas non plus de proposer un procédé mis en œuvre automatiquement.

Un but de la présente invention est donc de répondre aux inconvénients du document de l'art antérieur mentionné ci-dessus et en particulier, tout d'abord, de fournir un procédé de décontamination d'habitacle d'un véhicule automobile mis en œuvre automatiquement sans risque et permettant une décontamination efficace de l'ensemble de l'habitacle.

Pour cela un premier aspect de l'invention concerne un procédé de décontamination d'habitacle pour décontaminer un habitacle de véhicule automobile comprenant une étape de détection de concentration en composants organiques volatils d'origine biologique, une étape de comparaison de la concentration détectée à un seuil de pollution, une étape de détection d'occupant pour détecter si un occupant est présent dans l'habitacle si la concentration détectée est supérieure au seuil de pollution, et une étape de décontamination automatique de l'habitacle s'il est détecté que le véhicule est inoccupé. et une étape de communication remplaçant l'étape de décontamination automatique, pour émettre un message d'avertissement, s'il est détecté que le véhicule est occupé. De cette manière, il est possible de mettre automatiquement en œuvre un procédé de décontamination lorsque le véhicule est inoccupé, et si le véhicule est occupé, on évite d'intoxiquer un passager et on l'invite par exemple à quitter le véhicule avant la décontamination.

De manière avantageuse, le procédé de décontamination d'habitacle comprend en outre une étape de détection de roulage en amont de l'étape de détection d'occupant, l'étape de détection de roulage mettant en œuvre l'étape de détection d'occupant dans l'habitacle seulement si le véhicule est à l'arrêt ou l'étape de communication, si le véhicule est en roulage. De cette manière, on augmente la sécurité en doublant les étapes de détection.

Une réalisation particulièrement intéressante consiste en ce que l'étape de détection de concentration en composés polluants est mise en œuvre par un détecteur infrarouge, Raman ou un spectromètre de masse. Ainsi, la concentration est mesurée de manière précise.

Avantageusement, l'étape de décontamination comprend la mise en œuvre d'au moins l'un moyen de décontamination choisi dans le groupe comprenant une ventilation/recirculation d'air, des huiles essentielles, un ioniseur, un traitement chimique, une régulation de chauffage et l'une quelconque combinaison de ceux-ci. De cette manière, on peut décontaminer avec efficacité tout type de pollution.

De manière avantageuse, les composés polluants détectés sont des composants organiques volatils d'origine biologique. Ainsi, on peut agir sur les mauvaises odeurs.

Une réalisation particulièrement intéressante consiste en ce que le procédé est programmable. De cette manière, on augmente sa facilité d'utilisation.

Un second aspect de l'invention concerne un véhicule automobile qui comprend un habitacle et au moins un détecteur de composants organiques volatils (COV) d'origine biologique agencé pour détecter une concentration de COV d'origine biologique dans l'habitacle, le véhicule automobile comprenant en outre un système de décontamination d'habitacle de véhicule automobile agencé pour mettre en œuvre le procédé de décontamination selon le premier aspect de l'invention.

Une réalisation particulièrement intéressante consiste en ce que le détecteur de composés organiques volatils (COV) est agencé dans un filtre à particule et/ou pour détecter une concentration de COV dans un filtre à particules. De cette manière, on maximise son efficacité.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un schéma bloc du procédé de la présente invention,
- la figure 2 représente schématiquement un véhicule automobile comprenant un système de décontamination de la présente invention,

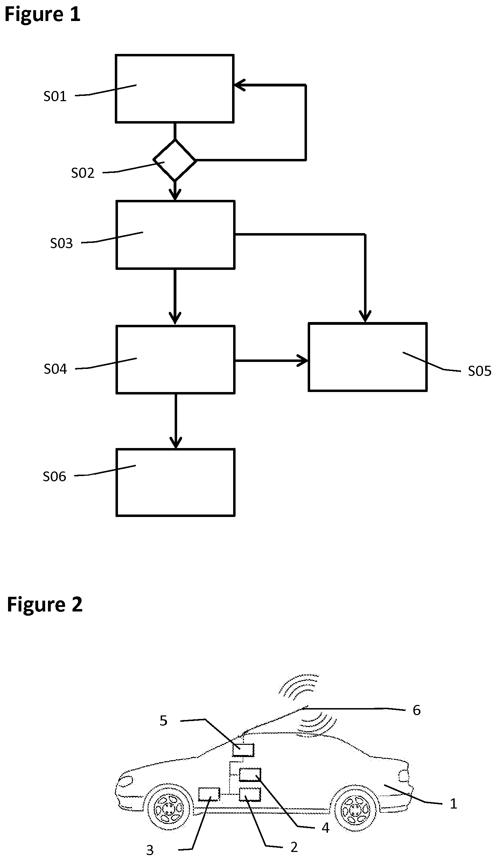

La figure 1 représente un mode de réalisation préféré d'un procédé de décontamination d'habitacle pour décontaminer un habitacle de véhicule automobile comprenant une étape S01 de détection de concentration en composés polluants, qui sont des composants organiques volatils d'origine biologique, par exemple bactérienne ou fongique, dans l'habitacle, suivie par une étape S02 de comparaison de la concentration détectée à un seuil de pollution. Cette étape de détection S01 de concentration en composés polluants est, de préférence, mise en œuvre par un détecteur infrarouge, Raman ou un spectromètre de masse. Ce seuil de pollution peut être prédéterminé, préenregistré ou calculé en temps réel en fonction des données GPS ou du même genre. Comme représenté, s'il est détecté que la concentration en polluants est inférieure au seuil, alors le procédé est terminé et il reprend à l'étape S01.

En revanche, s'il est détecté que la concentration en polluants est supérieure au seuil, alors le procédé continue et passe, à l'étape S04 de détection d'occupants ou, de préférence, à l'étape optionnelle S03 qui est une étape de détection de roulage en amont de l'étape de détection d'occupant S04. Lorsque cette étape de détection de roulage S03 détecte que le véhicule n'est pas à l'arrêt et roule, elle passe à l'étape S05 et envoie un message d'avertissement aux occupants via un moyen d'avertissement 5 et/ou à un garagiste via un moyen de communication 6. Le message peut avertir sur un besoin de décontamination ou sur une concentration en COV et autres similaires. Au contraire, si l'étape de détection de roulage S03 ne détecte aucun roulage et estime donc que le véhicule est à l'arrêt, le procédé passe alors à l'étape de détection d'occupants dans l'habitacle S04.

Cette étape de détection d'occupants S04 détecte si un ou plusieurs occupants sont présents dans l'habitacle, où qu'ils soient dans l'habitacle, et à partir de cette détection, déclenche automatiquement soit une étape de décontamination S06 automatique de l'habitacle, s'il est détecté que le véhicule est inoccupé, soit l'étape de communication d'avertissement S05 déjà décrite plus haut, bien que le message puisse être légèrement différent selon le cas, remplaçant l'étape de décontamination S06 automatique, pour émettre un message d'avertissement lorsqu'il est détecté que le véhicule 1 est occupé.

Cette étape de décontamination S06 comprend au moins la mise en œuvre de l'un moyen de décontamination, de préférence par traitement de l'air et/ou des éléments de l'habitacle, choisi dans le groupe comprenant une ventilation/recirculation d'air, une utilisation d'huiles essentielles, une mise en œuvre d'un ioniseur, un traitement chimique, une régulation de chauffage et l'une quiconque combinaison de ceux-ci.

Bien que cela n'apparaisse pas dans les figures, le procédé est de préférence programmable. Ainsi, un utilisateur peut programmer qu'à chaque arrêt du moteur le procédé est lancé.

L'invention porte également sur un véhicule automobile 1 tel que représenté sur la figure 2, qui comprend un habitacle et un détecteur 2 de composants organiques volatils (COV) d'origine biologique, par exemple bactérienne ou fongique, agencé pour détecter une concentration de COV dans l'habitacle.

Le véhicule automobile comprend également en outre un système de décontamination 4 d'habitacle de véhicule automobile agencé pour mettre en œuvre le procédé de décontamination décrit ci-dessus, c'est-à-dire qu'il peut mettre en œuvre un moyen de décontamination choisi dans le groupe comprenant une ventilation/recirculation d'air, une utilisation d'huiles essentielles, une mise en œuvre d'un ioniseur, un traitement chimique, une régulation de chauffage et l'une quelconque combinaison de ceux-ci.

De plus, dans le véhicule automobile, le détecteur 2 de composés organiques volatils (COV) est agencé pour détecter une concentration de COV dans un filtre à particule 3. Pour faciliter cela, il est de préférence situé à côté du filtre 3.

Le véhicule présente également un moyen d'avertissement 5 qui peut être un écran affichant un message ou un haut parleur émettant un message sonore ou du même genre. De plus, le véhicule représenté sur la figure 2 comprend également, schématiquement représenté, un moyen de communication 6, agencé pour transmettre le message d'avertissement à un garagiste prédéterminé ou une centrale recueillant ce type d'informations.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence aux diverses combinaisons de moyen de décontamination, aux types de filtres ou de détecteurs, etc.

## Revendications

1. Procédé de décontamination d'habitacle pour décontaminer un habitacle de véhicule automobile comprenant :
une étape (S01) de détection de concentration en composants organiques volatils d'origine biologique,
une étape (S02) de comparaison de la concentration détectée à un seuil de pollution,
une étape de détection d'occupant (S04) pour détecter si un occupant est présent dans l'habitacle, si la concentration détectée est supérieure au seuil de pollution,
une étape de décontamination (S06) automatique de l'habitacle, s'il est détecté que le véhicule est inoccupé,
**caractérisé en ce que** une étape de communication (S05) remplace l'étape de décontamination (S06) automatique, pour émettre un message d'avertissement, s'il est détecté que le véhicule (1) est occupé.

2. Procédé de décontamination d'habitacle selon la revendication 1, **caractérisé en ce qu'**il comprend en outre une étape de détection de roulage (S03) en amont de l'étape de détection d'occupant (S04), l'étape de détection de roulage mettant en œuvre l'étape de détection d'occupants dans l'habitacle seulement si le véhicule est à l'arrêt, ou l'étape de communication (S05) si le véhicule est en roulage.

3. Procédé de décontamination d'habitacle selon l'une quelconque des revendications 1 ou 2, **caractérisé en ce que** l'étape de détection (S01) de concentration en composants organiques volatils est mise en œuvre par un détecteur infrarouge, Raman ou un spectromètre de masse.

4. Procédé de décontamination d'habitacle selon l'une quelconque des revendications 1 à 3, **caractérisé en ce que** l'étape de décontamination (S06) comprend la mise en œuvre d'au moins l'un moyen de décontamination choisi dans le groupe comprenant une ventilation/recirculation d'air, des huiles essentielles, un ioniseur, un traitement chimique, une régulation de chauffage et l'une quelconque combinaison de ceux-ci.

5. Procédé de décontamination d'habitacle selon l'une quelconque des revendications 1 à 4, **caractérisé en ce que** le procédé est programmable.

6. Véhicule automobile (1) comprenant un habitacle et au moins un détecteur (2) de composants organiques volatils (COV) d'origine biologique, agencé pour détecter une concentration de COV d'origine biologique dans l'habitacle, comprenant en outre un système de décontamination (4) d'habitacle de véhicule automobile, agencé pour mettre en œuvre le procédé de décontamination selon l'une des revendications 1 à 5.

7. Véhicule automobile selon la revendication 6, **caractérisé en ce que** le détecteur (2) de composés organiques volatils (COV) est agencé dans un filtre à particule et/ou pour détecter une concentration de COV dans un filtre à particule (3).

## Patentansprüche

1. Verfahren zur Dekontaminierung eines Innenraums zur Dekontaminierung eines Innenraums eines Kraftfahrzeugs, umfassend:
- einem Schritt (S01) zum Nachweis der Konzentration flüchtiger organischer Bestandteile biologischen Ursprungs,
- einen Schritt (S02) zum Vergleich der ermittelten Konzentration mit einer Schadstoffschwelle,
- eine Insassenerkennungsstufe (S04), um festzustellen, ob ein Insasse im Fahrgastraum anwesend ist, wenn die gemessene Konzentration über der Schadstoffschwelle liegt;
- eine automatische Dekontaminierungsstufe (S06) des Fahrgastraums, wenn festgestellt wird, dass das Fahrzeug unbesetzt ist;
**dadurch gekennzeichnet, dass** ein Kommunikationsschritt (S05) den Schritt der automatischen Dekontaminierung (S06) ersetzt, um eine Warnmeldung auszugeben, wenn festgestellt wird, dass das Fahrzeug (1) besetzt ist.

2. Innenraum-Dekontaminierungsverfahren nach Anspruch 1, **dadurch gekennzeichnet, dass** es ferner einen Rollerfassungsschritt (S03) stromaufwärts des Insassenerfassungsschrittes (S04) umfasst, wobei der Rollerfassungsschritt den Schritt des Erfassens von Insassen in dem Innenraum nur dann ausführt, wenn das Fahrzeug steht, oder den Schritt des Übertragens (S05), wenn das Fahrzeug fährt.

3. Innenraum-Dekontaminationsverfahren nach einem der Ansprüche 1 oder 2, **dadurch gekennzeichnet, dass** der Schritt des Erfassens (S01) der Konzentration flüchtiger organischer Komponenten durch 25 einen Infrarot-, Raman- oder Massenspektrometer durchgeführt wird.

4. Dekontaminierungsverfahren für einen Fahrgastraum nach einem der Ansprüche 1 bis 3, **dadurch gekennzeichnet, dass** der Dekontaminierungsschritt (S06) den Betrieb wenigstens eines Dekontaminierungsmittels umfasst, das aus der Gruppe ausgewählt ist, die aus Belüftung/Rezirkulation von Luft, ätherischen Ölen, einem lonisator, einer chemischen Behandlung, einer Heizregelung und irgendeiner Kombination davon besteht.

5. Innenraum-Dekontaminationsverfahren nach einem der Ansprüche 1 bis 4, **dadurch gekennzeichnet, dass** das Verfahren programmierbar ist.

6. Kraftfahrzeug (1), umfassend einen Fahrgastraum und mindestens einen Detektor (2) für flüchtige organische Komponenten (VOC) biologischen Ursprungs, der angeordnet ist, um eine Konzentration von VOC biologischen Ursprungs im Fahrgastraum zu erfassen, ferner umfassend ein Dekontaminationssystem (4) des Fahrgastraums eines Kraftfahrzeugs, das angeordnet ist, um das Dekontaminationsverfahren nach einem der Ansprüche 1 bis 5 durchzuführen.

7. Kraftfahrzeug nach Anspruch 6, **dadurch gekennzeichnet, dass** der Detektor (2) für flüchtige organische Verbindungen (VOC) in einem Partikelfilter und/oder zur Detektion einer VOC-Konzentration in einem Partikelfilter (3) angeordnet ist.

## Claims

1. Method for decontaminating a passenger compartment of a motor vehicle comprising:
- a step (S01) for detecting the concentration of volatile organic components of biological origin,
- a step (S02) of comparing the detected concentration to a pollution threshold,
- an occupant detection step (S04) for detecting whether an occupant is present in the passenger compartment, if the detected concentration is above the pollution threshold,
- an automatic decontamination step (S06) of the passenger compartment, if it is detected that the vehicle is unoccupied,
**characterized in that** a communication step (S05) replaces the automatic decontamination step (S06), in order to send a warning message, if it is detected that the vehicle (1) is busy.

2. A method of decontaminating a passenger compartment according to claim 1, **characterized in that** it further comprises a taxi detection step (S03) upstream of the occupant detection step (S04), the taxi detection step implementing the occupant detection step in the passenger compartment only if the vehicle is stationary, or the communication step (S05) if the vehicle is running.

3. Method for decontaminating a passenger compartment according to either of claims 1 and 2, **characterized in that** the step of detecting (S01) the concentration of volatile organic components is carried out by 25 an infrared, Raman or mass spectrometer.

4. A method of decontaminating a passenger compartment according to any one of claims 1 to 3, **characterized in that** the decontamination step (S06) comprises implementing at least one decontamination means selected from the group consisting of air ventilation/recirculation, essential oils, an ionizer, chemical treatment, heating control and any combination thereof.

5. Method for decontaminating a passenger compartment according to any one of claims 1 to 4, **characterized in that** the method is programmable.

6. A motor vehicle (1) comprising a passenger compartment and at least one detector (2) of volatile organic components (VOCs) of biological origin, arranged to detect a concentration of VOCs of biological origin in the passenger compartment, further comprising a decontamination system (4) of a passenger compartment of a motor vehicle, arranged to implement the decontamination method according to one of claims 1 to 5.

7. Motor vehicle according to claim 6, **characterized in that** the volatile organic compound (VOC) detector (2) is arranged in a particle filter and/or for detecting a concentration of VOC in a particle filter (3).
